# EUROPEAN PATENT SPECIFICATION

(11) **EP 3 216 514 B1**
(45) Date of publication and mention of the grant of the patent: **09.12.2026**
(21) Application number: 17159773.5
(22) Date of filing: 08.03.2017
(51) Int. Cl.: B01D 65/08

(54) **AN IMPROVED TANGENTIAL FILTERING METHOD AND DEVICE**
VERFAHREN UND VORRICHTUNG ZUR VERBESSERTEN TANGENTIALEN FILTRIERUNG
PROCÉDÉ ET DISPOSITIF DE FILTRATION TANGENTIELLE AMÉLIORÉE

(30) Priority: 09.03.2016 IT UA20161506
(43) Date of publication of application: 13.09.2017
(73) Proprietor: OMNIA TECHNOLOGIES S.P.A., 31040 Trevignano (TV) (IT)
(72) Inventor: DELLA TOFFOLA, Giacomo, 31044 MONTEBLLUNA (IT); BONOTTO, Amedeo, 31028 VAZZOLA (IT)
(74) Representative: Dragotti & Associati S.P.A.

(56) References cited:
- WO-A1-03/031019
- WO-A1-2010/027456
- WO-A1-2012/032354
- WO-A1-2014/072284
- WO-A2-2006/039588
- DE-A1- 19 812 286
- US-A- 5 230 804
- US-A1- 2009 314 695
- US-A1- 2016 045 871

## Description

The present invention relates to an improved tangential filtering method, particularly for fluid products having a high concentration of solids, as well as a system which implements such method.

Filtering systems are known comprising a filtering bowl, which contains a filtering device therein and which is connected, on one side, to a feeding tank of the product to be filtered, and on the other side, to a filtered liquid collection tank.

The filtering device provided in the filtering bowl performs the separation of the liquid fraction of the product from the solid one and is provided with two outlets: a first outlet for the filtered liquid, or "permeate", which is sent to a collection tank, and a second outlet for the incompletely filtered product, or "concentrate" or "retentate", still containing a suspended solid fraction.

Among such filtering devices, ones using the tangential filtering principle are known. In particular, in this type of filtering system, the liquid to be filtered circulates/runs tangentially to the permeable membrane, and the filtering is obtained by means of the pressure difference existing between the inside and the outside of the membrane wall. More in detail, the liquid to be treated laps on a membrane which retains the particles over given sizes and lets through the liquid components, as a well as the small size particles, under the effect of the pressure provided by the liquid itself to be treated.

This filtering mode is particularly advantageous because the tangential flow of the liquid circulating during the filtering process makes it possible to clean the inner surface of the membrane continuously. US 2009/314695 A1 discloses a tangential filtration system comprising recirculation of the concentrate by a recirculation pump and a probe positioned downstream of the pump for detecting conditions indicative of gelling and fouling risks within the filtering elements.

For example, WO 03/031019 describes a filtering device which works according to a continuous self-cleaning mode, and this occurs simply and only because it operates according to the tangential filtering principle, since the product to be treated runs parallel and tangentially with respect to the central filtering pipe. In particular, WO 03/031019 teaches that, by crossing the filtering pipe, the fluid component of the product to be treated crosses the walls of the filtering pipe while the solid component remains inside the filtering pipe. In particular, such solid component which remains in the filtering pipe is fed to the outlet of the latter by the flow of further product to be treated which enters into the filtering pipe itself.

Appropriately, the performance of the membrane is adjusted by varying the pressures between the inside and the outside of the filtering pipe. Generally, in tangential filtering, the filtering membranes consist of bundles of pipes or conduits, arranged in elongated development modules within the filtering bowl, which is provided with an inlet mouth of the liquid to be filtered under pressure, with an outlet mouth of the filtered liquid and with an outlet for the retentate, which passes in the interstitial gaps between the pipes.

Gradually as the filtering proceeds, the retentate becomes denser because it gradually loses more and more liquid fraction and the solid fraction correspondingly increases. For example, as can be inferred from WO 03/031019, the product to be treated which enters into the filtering pipe, internally cleans the membranes dragging the unfiltered solid component with it and, therefore, the product at the pipe outlet itself is denser and denser.

It can thus be easily inferred that the filtering membranes can filter as long as the solid fraction concentration in the product to be filtered is lower than a given limit, having exceeded which, the filtering is no longer effective.

In order to establish the reaching of such concentration limit, it not useful to measure only the flow rate of the product to be filtered because this value is not significant/representative of the concentration of solid present in the product. Furthermore, working in line and continuously, it is not possible (or, in all cases, it is rather complicated) to measure the concentration of the solid fraction by means of a viscometer.

It is equally not useful to evaluate the concentration of the solid fraction present in the fluid to be filtered on the basis of pressure measurements because the pressure variations at stake are rather limited and therefore difficult to detect.

Currently, in the tangential filtering systems, while the filtered liquid fraction is continuously extracted, the retentate is discontinuously extracted/discharged following the interruption of the filtering process.

It can be easily inferred that the interruption of the filtering process and the successive steps of discharging of the retentate and of cleaning of the filters take a given time and reduce the overall efficiency of the system. It is worth considering, for example, that currently in the filtering of must dregs, the filtering process must be interrupted every 15-30 minutes on average, and that the step of emptying/cleaning of the filter, although depending on the size of the filter, lasts approximately 15 minutes.

Another known solution envisaged in the filtering systems consists in connecting the retentate outlet to the feeding tank through a recirculation circuit, which reintroduces the retentate into the feeding pipe of the tank to be filtered again and further. This solution makes it possible to decrease the frequency of the filtering process interruption because the discharging may be performed after much longer filtering periods. However, in this manner, the retentate tends to accumulate and sediment in the tank and, also considering the considerable size of the latter, its final cleaning is rather long and laborious.

Substantially, although on one hand this known solution makes it possible to lengthen the useful step of filtering, on the other it implies an inevitable lengthening of the final cleaning times of the filters and of the tank.

WO2010/027456 describes an ultrafiltering procedure which comprises an ultrafiltering unit to which the new product to be filtered is sent by means of a first pump associated with a first flow meter together with part of the retentate which exits from the ultrafiltering unit and which is recirculated by means of a second pump associated with a corresponding flow meter. Furthermore, WO2010/027456 envisages the possibility of improving the performance of the membranes during the step of working either by removing them for cleaning or by means of a regeneration/backflushing procedure. In particular, in order to do this, the useful step of filtering is interrupted at given intervals of time either to be able to remove the membranes or to recirculate the previously filtered liquid (or permeate) in opposite sense with respect to that of the liquid to be filtered so that the forced passage of the permeate through the membrane causes the removal of the solid deposits accumulated on their surface. Furthermore, it is worth noting that the feeding pressure is a particularly critical parameter in the case of ultrafiltering, such as that described in WO2010/027456, because the excessively high feeding pressures can damage the integrity of the ultrafiltering membrane.

It is the object of the invention to eliminate these drawbacks and to suggest a method which makes it possible to avoid the frequent interruption of the operation of the system to clean the filtering membranes and which, at the same time, makes it possible to avoid a laborious and lengthy final cleaning of the filter and/or of the tank.

It is another object of the invention to suggest a method and system which makes it possible to detect the concentration of the solid fraction in the product to be treated in simple and reliable manner also working in line and continuously.

It is another object of the invention to suggest a method and a system which require the discharging of the retentate and/or the cleaning of the filters only in case of actual need.

It is another object of the invention to suggest a method and a system which make it possible to obtain a permeate with considerably constant features in terms of solid fraction concentration.

It is another object of the invention to suggest a method and a system which make it possible to filter products which display a particularly high concentration of the solid fraction from the beginning.

It is another object of the invention to suggest a method and a system in which the cleaning of the filters is performed automatically without any intervention by the operator.

It is another object of the invention is to suggest a method and a system in which the filtering is effective and complete.

It is another object of the invention to suggest a method and a system which are simple and cost-effective.

It is another object of the invention to suggest a method and a system which display an alternative and/or improving characterization, in both construction and functional terms, with respect to the traditional ones.

All these objects, taken individually or in any combination thereof, and others which will be apparent from the following description, are achieved according to the invention by a method having the features of claim 1 and a system having the features of claim 4.

The present invention is further explained by means of a preferred embodiment given by way of nonlimiting practical example only with reference to the accompanying drawings, in which:

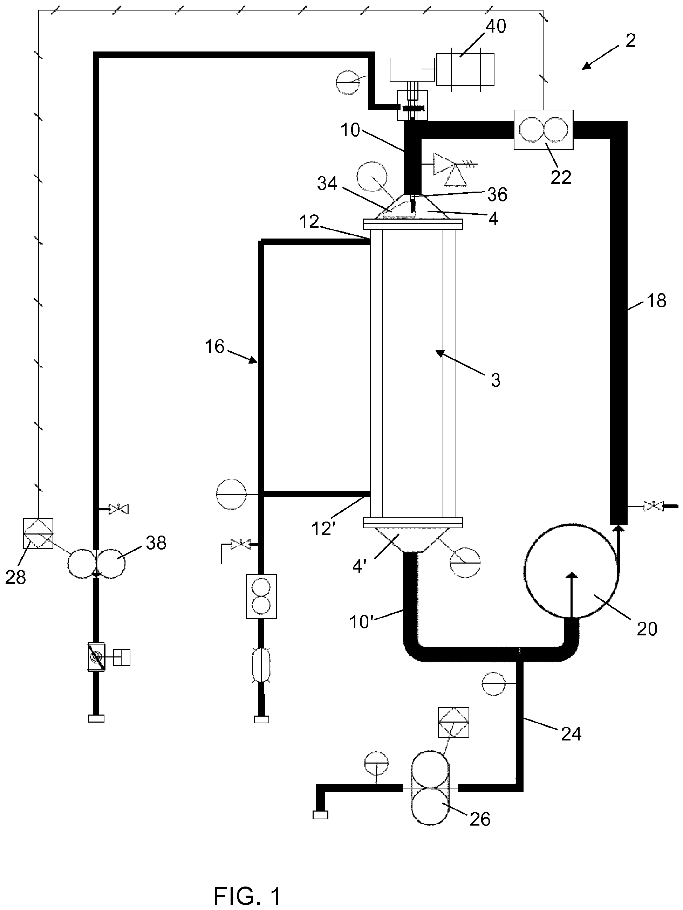

Figure 1 : shows a diagrammatic view of a hydraulic diagram of the tangential filtering system according to the invention,

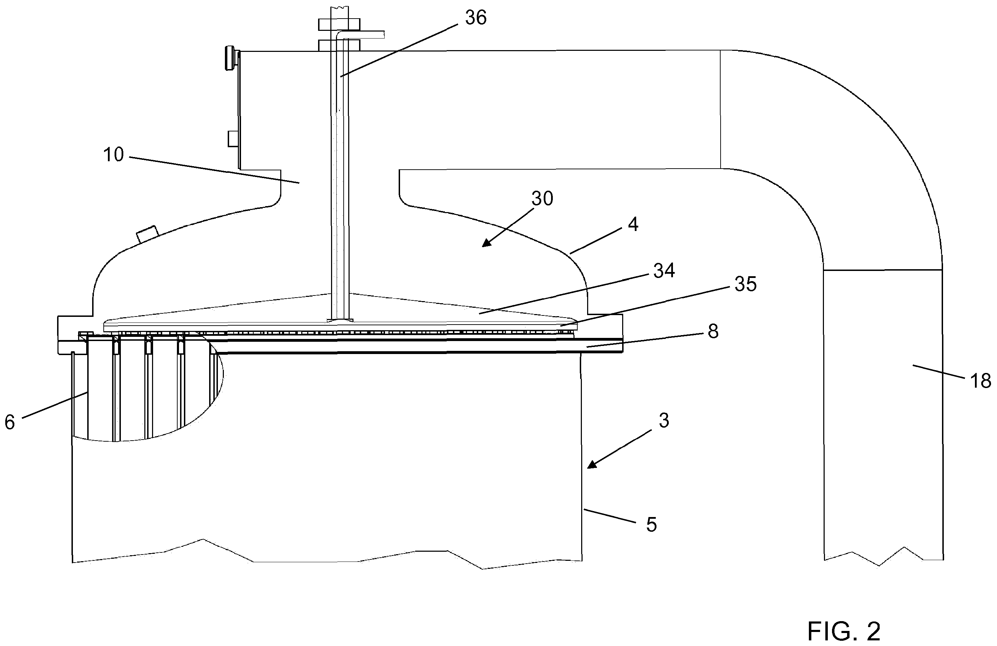

Figure 2 : shows an enlarged vertical section of a detail of the tangential filter.

As shown in the figures, the tangential filtering system according to the invention, indicated by reference numeral 2 as a whole, comprises a tangential filter 3, preferably having vertical extension, which may be of the traditional type and which, in particular, comprises a cylindrical plating 5, preferably having vertical axis, closed at the ends by two heads 4, 4' and with a plurality of filtering elements, preferably constituted by internal tubular membranes 6, made of micro-porous material and constituting the filtering elements of the tangential filter. More in detail, the ends of the tubular membranes 6 are fixed to two septa 8, fixed, in turn, to the plating 2 and to the two heads 4,4' between flanges integral thereto.

An inlet mouth 10 of the liquid to be filtered is applied to the upper head 4, while an outlet mouth 10' of the retentate, i.e. of product to be treated, is applied to the lower head 4', which longitudinally crossed the tubular membranes 6 without being subjected to filtering.

Two further mouths, one upper 12 and one lower 12', both connected to the outlet circuit 16 of the permeate, are also applied to the plating 5 near the two constraining flanges of the heads 4,4'.

The mouths 10,10' are connected to each other, externally to the filter 3, by a recirculation circuit 18 of the retentate. A feeding circuit 24 of new product to be filtered leads into such circuit 18, which is continuously introduced.

In particular, it is understood that hereinafter "product to be treated" which circulates in the circuit 18 and is introduced into the filter 3 means both the retentate which had already crossed the filter 3 at least once and the new product which has never crossed the filter 3 coming from the feeding circuit 24, pushed by a pump 26. In particular, in the filter 3, the product to be treated runs and advances, from the inlet mouth 10 to the outlet mouth 10', in parallel with respect to the longitudinal, preferably vertical, development of the filtering elements 6, and i.e. laps tangentially on the filtering surface thereof.

The recirculation circuit 18 is provided with a centrifugal pump 20, which circulates the product to be treated, and a sensor 22 (e.g. a flow meter) which detects the speed and/or flow rate of the product to be treated in the recirculation circuit. According to the invention, the sensor 22 is positioned downstream of the centrifugal pump 20.

Necessarily, in the recirculation circuit 18, the pump 20 must be of centrifugal type because in such pump type the speed/flow rate of the product let out from it decreases as the concentration of the solid fraction increases; therefore, by detecting and monitoring the speed/flow rate of the product to be treated which exits from the centrifugal pump 20 by means of the sensor 22, it is possible to obtain an indication of the concentration of the solid fraction present in the product to be treated, which is then intended to be introduced in the tangential filter 3. In particular, considering that such product has just crossed the tangential filter 3, the aforesaid indication is also representative of the obstruction level of the membranes 6 of such filter.

The sensor 22 is electrically connected to a control unit 28, implemented, for example, by means of a microcontroller, which receives the speed/flow rate value detected by the sensor 22 and which is configured to compare such value with one or more predetermined speed/flow rate values.

Preferably, a first preset speed/flow rate value may be envisaged, which represents a value to be maintained because it corresponds to an optimal filtering situation. More in detail, the first preset speed/flow rate value, which identifies an optimal filtering situation desired for the filtering membranes 6 and must be continuously compared with the speed/flow rate value detected by the sensor 22, is approximately 2m/s.

Preferably, either additional or alternatively to said first value, a second preset speed/flow rate value may be envisaged, which represents instead a lower threshold limit value, because there is no filtering in the tangential filter under it.

More in detail, the second preset speed/flow rate value, which identifies a lower limit situation for the filtering membranes 6 and which must be compared with the speed/flow rate value detected by the sensor 22, is approximately 1-1.5m/s.

At the upper head 4 of the tangential filtering device 3, a cleaning device 30, of traditional type, which is connected to the shaft of an electric motor 40, is envisaged. In particular, such device comprises a revolving hollow mouth 34, the revolution axis of which coincides with the axis of the plating 5 and which is provided with a blade 35 substantially facing and in contact with the upper inlet end of the filtering membranes 6. Furthermore, revolving hollow mouth 34 leads to a central vertical duct 36 connected to a suction pump 38.

The control unit 28 is electrically connected to the suction pump 38 for extracting the solid fraction which is retained within the tangential filter 3 and which is removed after the passage of the blade 35 associated with the revolving mouth 34.

In particular, the control unit 28 is appropriately configured to control the activation of the suction pump 38 of the cleaning device 30, when the speed/flow rate value detected by the sensor 22 drops under the desired preset value which is stored in the unit itself.

Advantageously, on the basis of such comparison, the control unit correspondingly controls the activation of the pump 38.

Appropriately, the speed/flow rate values detected by the sensor 22 are continuously transmitted to the microcontroller of the control unit 28, in which all the comparison values are stored. More in detail, at a predetermined frequency, which is preferably substantially continuous (i.e. in the order of milliseconds), the microcontroller of the control unit 28 samples the signal detected by the sensor 22 and, by means of a comparator, compares it with the preset values (optimal and/or threshold).

So, substantially, the comparator of the control unit 28 is configured to compare, in sequence and with a substantially continuous predetermined frequency, a plurality of values detected by the sensor 22 and representative of the speed/flow rate of the product to be treated in the recirculation circuit 18, which is about to be subjected to filtering, with the corresponding comparison values and to control the suction pump 38 in corresponding manner.

System operation clearly derives from that described.

In particular, during the step of filtering, the new product to be treated is introduced by the pump 26 into the feeding circuit 24 and from here into the recirculation circuit 18, in which the pump 20 is activated, which then introduces it into the filter 3, through the inlet mouth 10.

Because of the pressure difference (overpressure) existing between the recirculation circuit 18 and the inner portion of the plating 5, part of the liquid fraction present in the product to be treated/filtered crosses the side wall of the tubular membranes 6 and is thus separated from the solid fraction, while the product part, which flows along the membranes 6 longitudinally but does not cross their side wall, exits with higher concentration of solid particles through the outlet mouth 10' and mixes with the new product to filter, which comes from the feeding circuit 24.

More in detail, the filtered liquid (permeate), and i.e. the one which passed through the side wall of the tubular membranes 6, exits from the vents 12 and 12' and then, through the outlet circuit 16, reaches a permeate container (not shown).

Gradually as the filtering process continues, the solid particles, which in the tangential filter 3 are separated from the liquid, are deposited on the side wall of the tubular membrane 6, causing the gradual obstruction of the filter itself. Substantially, gradually as the filtering process continues, the product to be treated which enters into the recirculation circuit 18 is denser and denser, because it contains a higher and higher solid fraction of the retentate which has already crossed the filter 3 at least once. So, the fact that the product to be treated which runs in the recirculation circuit 18 is denser and denser (and thus heavier and heavier) causes a corresponding decrease of the speed/flow rate of the product to be filtered, which is detected by the speed/flow rate sensor 22 placed downstream of the centrifugal pump 20.

When the speed/flow rate detected by the sensor 22 drops under the preset value, the control unit 28 correspondingly and appropriately controls the activation of the pump 38 which sucks the solid fraction removed from the blade 35 through the revolving mouth 34 and the vertical pipe 36.

In particular, when the speed/flow rate detected by the sensor 22 drops under the second preset value (the one corresponding to the lower limit speed/flow rate value), the control unit 28 controls a higher suction level of the pump 28 with respect to when the speed/flow rate detected by the sensor 22 drops under the first preset value (the one corresponding to the optimal speed/flow rate to be maintained).

So, substantially, the solid fraction is removed continuously and automatically, controlled by the control unit 28, according to the speed/flow rate of the product to be treated, detected by the sensor 22 in the recirculation circuit 18.

Following the suction of the solid particles by the suction pump 38, the concentration of the solid fraction in the product to be treated by means of the membrane 6 of the tangential filter 3 decreases, and by becoming correspondingly lighter, the speed/flow rate of the product to be treated, which is detected by the sensor 22, increases and exceeds the (optimal and/or threshold) comparison value preset in the control unit 28.

Appropriately, during the entire filtering process, the blade 35 associated with the revolving mouth 34 is actuated by the electrical motor 40, so as to lap the inlet opening of the filtering membranes 6 continuously and so as to remove the solid surface layer which deposited on them during the filtering.

Preferably, the method according to the invention, as well as the system which implements such method, are adapted and intended to be used in the food processing sector for filtering organic fluid products, such as for example in the wine making sector for filtering wine.

From the above, it results that the method and system according to present invention are more advantageous than the traditional methods and systems because:
- by virtue of the continuous cleaning of the membranes, they make it possible to avoid interruptions of the filtering process, which thus becomes more effective,
- they make it possible to prevent the complete obstruction of the membranes, and thus the difficulties related to their cleaning,
- they optimize filtering because they make it possible to treat a product which has substantially always the same features in terms of concentration of the solid fraction;
- they make it possible to filter products which have a particularly high concentration from the beginning; in particular, since the control is aimed at maintaining the concentration of the product to be treated constant/optimal, such concentration can never increase in undesired manner over the initial value.

In particular, the present solution differs from WO2010/027456 and WO 03/031019 in that neither of these envisages in any manner the possibility of automatically controlling the activation of a cleaning device of the filtering elements on the basis of the speed/flow rate detected by the speed/flow rate sensor (flow meter) provided in the recirculation circuit.

Furthermore, WO2010/027456 does not envisage the use in the recirculation circuit of a pump which is specifically of the centrifugal type nor does it envisage the speed/flow rate sensor to be positioned downstream thereof. Advantageously, according to the present invention, the use of a speed/flow rate sensor (flow meter) in the recirculation circuit arranged downstream of a centrifugal pump makes it possible to achieve an appropriate and reliable detection of the concentration of the solid fraction of the product to be treated which is sent in input to the tangential filter, in a simple, in-line and continuous manner, thus avoiding the use of complicated viscometers and/or of basing the method on pressure variations which are particularly difficult to detect.

## Claims

1. An improved tangential filtering method, in particular for filtering organic liquid products in the food processing sector, of the type which uses a tangential filter (3) comprising at least one filtering element (6), along which the fluid product to be treated is intended to flow in parallel so as to separate the permeate, which is collected and extracted through at least one permeate outlet, from the retentate, which is then reintroduced into the filter itself by means of a recirculation circuit (18), wherein:
- the speed/flow rate of the product to be treated is detected by means of a speed/flow rate sensor (22) positioned inside the recirculation circuit (18), in which a centrifuge pump (20) for recirculating said product to be treated is also provided, said speed/flow rate sensor (22) being inserted in said recirculation circuit (18) in a downstream position with respect to said centrifuge pump (20),
- the speed/flow rate detected by means of said sensor (22) is periodically compared with at least one predetermined value and the activation of a cleaning device (30), which cleans said filtering elements (6) without interrupting the filtering, is controlled on the basis of such comparison;
wherein a control unit (28) is configured to compare said detected speed/flow rate value with the at least one predetermined value and to control correspondingly, based on said comparison, the activation of the cleaning device (30) for cleaning the filtering elements (6), without interrupting the step of filtering;
**characterized in that** when the speed/flow rate of the product to be treated drops under said at least one predetermined value, a suction pump (38) of the cleaning device (30) is activated, said at least one predetermined value comprising a first value, which represents an optimal speed/flow rate to be maintained, and a second value, which represents a lower threshold speed/flow rate value not to be exceeded,
and **in that** when the speed/flow rate drops under the second value the control unit (28) controls a higher suction level of the pump (38) with respect to when the speed/flow rate drops under the first value.

2. A method according to one or more of the preceding claims, **characterized in that** said retentate is reintroduced, together with new product to be treated, into the filter (3) by means of said recirculation circuit (18).

3. A method according to claim 1, **characterized in that** said first predetermined value to be compared with the speed/flow rate detected by means of said sensor (22) is 2m/s and/or **in that** said second predetermined speed value to be compared with the speed/flow rate value detected by means of said sensor (22) is 1 m/s-1.5m/s.

4. A tangential filtering system, in particular for filtering organic fluid products in the food processing industry, wherein the system comprises:
- a tangential filter (3), provided with filtering elements (6), with an inlet (10) of the product to be treated, with an outlet (10') of the retentate, and with at least one outlet (12,12') of the permeate,
- a recirculation circuit of the product to be treated (18) which connects said inlet (10) of the tangential filter to said outlet (10') of the retentate and with a feeding circuit of the new product to be treated (24),
- a centrifugal pump (20) and a speed/flow rate sensor (22) inserted in said recirculation circuit (18), said speed/flow rate sensor (22) being inserted in said recirculation circuit (18) in a downstream position with respect to said centrifuge pump (20),
- a control unit (28), connected to said sensor (22) so as to receive the speed/flow of product to be treated, detected by said sensor (22) inside said recirculation circuit (18), said control unit (28) being configured to compare said detected speed/flow rate value with at least one predetermined value and to control correspondingly, based on said comparison, the activation of a cleaning device (30) for cleaning the filtering elements (6) of said filter, without interrupting the step of filtering;
**characterized in that** said cleaning device (30) comprises a pump (38) which aspirates the solid particles of said product to be treated retained by the filtering elements (6) of said tangential filter (3), said pump (38) being designed to be activated when the speed/flow rate of the product to be treated drops under said at least one predetermined value, the at least one predetermined value comprising a first value, which represents an optimal speed/flow rate to be maintained, and a second value, which represents a lower threshold speed/flow rate value not to be exceeded, and
**in that** the control unit (28) is designed to control a higher suction level of the pump (38) when the speed/flow rate drops under the second value with respect to when the speed/flow rate drops under the first value.

5. A system according to claim 4, **characterized in that** said control unit (28) is configured to compare, in sequence and with a predetermined substantially continuous frequency in the order of milliseconds, the values detected by said sensor (22) with said at least one preset value.

6. A system according to one or more claims 4 and 5, **characterized in that** said tangential filter is of the tubular membrane type (6).

7. A system according to one or more claims from 4 to 6, **characterized in that** said tangential filter (3) has a vertical extension.

8. A system according to one or more of the preceding claims from 4 to 7, **characterized in that** said cleaning device (30) comprises, at the inlet of said tangential filter (3), a revolving brush (35) which is in contact with the inlet end of the filtering elements (6) and continuously scrapes them.

9. A system according to claims 4 or 8, **characterized in that** the cleaning device (30) is mounted on a revolving hollow mouth (34), which connects to a channel (36) in connection with said intake pump (38).

## Patentansprüche

1. Verbessertes Tangentialfiltrationsverfahren, insbesondere zum Filtern organischer flüssiger Produkte im Lebensmittelverarbeitungssektor, von der Art, bei der ein Tangentialfilter (3) verwendet wird, umfassend mindestens ein Filterelement (6), entlang dessen das zu behandelnde Fluidprodukt parallel strömen soll, um das Permeat, das gesammelt und durch mindestens einen Permeatauslass extrahiert wird, von dem Retentat zu trennen, das anschließend mittels eines Rezirkulationskreislaufs (18) wieder in den Filter selbst eingeleitet wird, wobei:
- die Geschwindigkeit/Durchflussrate des zu behandelnden Produkts mittels eines Geschwindigkeits- /Durchflussratensensors (22) erfasst wird, der innerhalb des Rezirkulationskreislaufs (18) positioniert ist, in dem auch eine Zentrifugenpumpe (20) zum Rezirkulieren des zu behandelnden Produkts bereitgestellt ist, wobei der Geschwindigkeits-/Durchflussratensensor (22) in dem Rezirkulationskreislauf (18) in einer stromabwärtigen Position in Bezug auf die Zentrifugenpumpe (20) eingesetzt ist,
- die mittels des Sensors (22) erfasste Geschwindigkeit/Durchflussrate periodisch mit mindestens einem vorbestimmten Wert verglichen wird und die Aktivierung einer Reinigungsvorrichtung (30), die die Filterelemente (6) reinigt, ohne die Filtration zu unterbrechen, auf Grundlage dieses Vergleichs gesteuert wird;
wobei eine Steuereinheit (28) konfiguriert ist, um den erfassten Geschwindigkeits-/Durchflussratenwert mit dem mindestens einen vorbestimmten Wert zu vergleichen und entsprechend auf Grundlage des Vergleichs die Aktivierung der Reinigungsvorrichtung (30) zum Reinigen der Filterelemente (6) zu steuern, ohne den Filtrationsschritt zu unterbrechen;
**dadurch gekennzeichnet, dass**, wenn die Geschwindigkeit/Durchflussrate des zu behandelnden Produkts unter den mindestens einen vorbestimmten Wert fällt, eine Saugpumpe (38) der Reinigungsvorrichtung (30) aktiviert wird, der mindestens eine vorbestimmte Wert umfassend einen ersten Wert, der eine aufrechtzuerhaltende optimale Geschwindigkeit/Durchflussrate darstellt, und einen zweiten Wert, der einen niedrigeren Schwellenwert der Geschwindigkeit/Durchflussrate darstellt, der nicht überschritten werden soll,
und dadurch, dass, wenn die Geschwindigkeit/Durchflussrate unter den zweiten Wert fällt, die Steuereinheit (28) ein höheres Saugniveau der Pumpe (38) in Bezug darauf steuert, wenn die Geschwindigkeit/Durchflussrate unter den ersten Wert fällt.

2. Verfahren nach einem oder mehreren der vorstehenden Ansprüche, **dadurch gekennzeichnet, dass** das Retentat zusammen mit neuem zu behandelndem Produkt mittels des Rezirkulationskreislaufs (18) wieder in den Filter (3) eingeleitet wird.

3. Verfahren nach Anspruch 1, **dadurch gekennzeichnet, dass** der erste vorbestimmte Wert, der mit der mittels des Sensors (22) erfassten Geschwindigkeit/Durchflussrate zu vergleichen ist, 2 m/s beträgt und/oder dass der zweite vorbestimmte Geschwindigkeitswert, der mit dem mittels des Sensors (22) erfassten Geschwindigkeits-/Durchflussratenwert zu vergleichen ist, 1 m/s-1,5 m/s beträgt.

4. Tangentialfiltrationssystem, insbesondere zum Filtern organischer Fluidprodukte in der Lebensmittelverarbeitungsindustrie, wobei das System Folgendes umfasst:
- einen Tangentialfilter (3), der mit Filterelementen (6), mit einem Einlass (10) für das zu behandelnde Produkt, mit einem Auslass (10') für das Retentat und mit mindestens einem Auslass (12, 12') für das Permeat bereitgestellt ist,
- einen Rezirkulationskreislauf für das zu behandelnde Produkt (18), der den Einlass (10) des Tangentialfilters mit dem Auslass (10') für das Retentat und mit einem Zuführkreislauf für das neue zu behandelnde Produkt (24) verbindet,
- eine Zentrifugenpumpe (20) und einen Geschwindigkeits-/Durchflussratensensor (22), die in den Rezirkulationskreislauf (18) eingesetzt sind, wobei der Geschwindigkeits-/Durchflussratensensor (22) in dem Rezirkulationskreislauf (18) in einer stromabwärtigen Position in Bezug auf die Zentrifugenpumpe (20) eingesetzt ist,
- eine Steuereinheit (28), die mit dem Sensor (22) verbunden ist, um die von dem Sensor (22) innerhalb des Rezirkulationskreislaufs (18) erfasste Geschwindigkeit/Durchflussrate des zu behandelnden Produkts zu empfangen, wobei die Steuereinheit (28) konfiguriert ist, um den erfassten Geschwindigkeits-/Durchflussratenwert mit mindestens einem vorbestimmten Wert zu vergleichen und entsprechend auf Grundlage des Vergleichs die Aktivierung einer Reinigungsvorrichtung (30) zum Reinigen der Filterelemente (6) des Filters zu steuern, ohne den Filtrationsschritt zu unterbrechen;
**dadurch gekennzeichnet, dass** die Reinigungsvorrichtung (30) eine Pumpe (38) umfasst, die die durch die Filterelemente (6) des Tangentialfilters (3) zurückgehaltenen Feststoffpartikel des zu behandelnden Produkts ansaugt, wobei die Pumpe (38) dazu ausgelegt ist, aktiviert zu werden, wenn die Geschwindigkeit/Durchflussrate des zu behandelnden Produkts unter den mindestens einen vorbestimmten Wert fällt, der mindestens eine vorbestimmte Wert umfassend einen ersten Wert, der eine aufrechtzuerhaltende optimale Geschwindigkeit/Durchflussrate darstellt, und einen zweiten Wert, der einen niedrigeren Schwellenwert der Geschwindigkeit/Durchflussrate darstellt, der nicht überschritten werden soll, und
dadurch, dass die Steuereinheit (28) ausgelegt ist, um ein höheres Saugniveau der Pumpe (38) zu steuern, wenn die Geschwindigkeit/Durchflussrate unter den zweiten Wert fällt, in Bezug darauf, wenn die Geschwindigkeit/Durchflussrate unter den ersten Wert fällt.

5. System nach Anspruch 4, **dadurch gekennzeichnet, dass** die Steuereinheit (28) konfiguriert ist, um die von dem Sensor (22) erfassten Werte nacheinander und mit einer vorbestimmten, im Wesentlichen kontinuierlichen Frequenz in der Größenordnung von Millisekunden mit dem mindestens einen voreingestellten Wert zu vergleichen.

6. System nach einem oder mehreren der Ansprüche 4 und 5, **dadurch gekennzeichnet, dass** der Tangentialfilter vom Typ einer Rohrmembran (6) ist.

7. System nach einem oder mehreren der Ansprüche 4 bis 6, **dadurch gekennzeichnet, dass** der Tangentialfilter (3) eine vertikale Erstreckung besitzt.

8. System nach einem oder mehreren der vorstehenden Ansprüche 4 bis 7, **dadurch gekennzeichnet, dass** die Reinigungsvorrichtung (30) am Einlass des Tangentialfilters (3) eine rotierende Bürste (35) umfasst, die mit dem Einlassende der Filterelemente (6) in Kontakt steht und diese kontinuierlich abschabt.

9. System nach Anspruch 4 oder 8, **dadurch gekennzeichnet, dass** die Reinigungsvorrichtung (30) an einer rotierenden hohlen Mündung (34) montiert ist, die mit einem Kanal (36) verbunden ist, der mit der Ansaugpumpe (38) in Verbindung steht.

## Revendications

1. Procédé de filtration tangentielle amélioré, destiné en particulier à filtrer des produits liquides organiques dans le secteur agroalimentaire, du type qui utilise un filtre tangentiel (3) comprenant au moins un élément de filtration (6), le long duquel le produit fluide à traiter est destiné à s'écouler en parallèle de manière à séparer le perméat, qui est recueilli et évacué à travers au moins une sortie de perméat, à partir du rétentat, qui est ensuite réintroduit dans le filtre lui-même au moyen d'un circuit de recirculation (18), dans lequel :
- la vitesse/le débit du produit à traiter est détecté(e) au moyen d'un capteur de vitesse/débit (22) positionné à l'intérieur du circuit de recirculation (18), dans lequel une pompe centrifuge (20) destinée à faire recirculer ledit produit à traiter est également prévue, ledit capteur de vitesse/débit (22) étant inséré dans ledit circuit de recirculation (18) dans une position en aval par rapport à ladite pompe centrifuge (20),
- la vitesse/le débit détecté(e) au moyen dudit capteur (22) est comparé(e) périodiquement à au moins une valeur prédéterminée et l'activation d'un dispositif de nettoyage (30), qui nettoie lesdits éléments de filtration (6) sans interrompre la filtration, est contrôlée sur la base de cette comparaison ;
dans lequel une unité de contrôle (28) est configurée pour comparer ladite valeur de vitesse/débit détectée à l'au moins une valeur prédéterminée et pour contrôler en conséquence, sur la base de ladite comparaison, l'activation du dispositif de nettoyage (30) destiné à nettoyer les éléments de filtration (6), sans interrompre l'étape de filtration ;
**caractérisé en ce que** lorsque la vitesse/le débit du produit à traiter passe en dessous de ladite au moins une valeur prédéterminée, une pompe d'aspiration (38) du dispositif de nettoyage (30) est activée, ladite au moins une valeur prédéterminée comprenant une première valeur, qui représente une vitesse/un débit optimal(e) à maintenir, et une seconde valeur, qui représente une valeur de vitesse/débit seuil inférieure à ne pas dépasser,
et **en ce que** lorsque la vitesse/le débit passe en dessous de la seconde valeur, l'unité de contrôle (28) contrôle un niveau d'aspiration supérieur de la pompe (38) par rapport à lorsque la vitesse/le débit passe en dessous de la première valeur.

2. Procédé selon une ou plusieurs des revendications précédentes, **caractérisé en ce que** ledit rétentat est réintroduit, conjointement avec un nouveau produit à traiter, dans le filtre (3) au moyen dudit circuit de recirculation (18).

3. Procédé selon la revendication 1, **caractérisé en ce que** ladite première valeur prédéterminée à comparer à la vitesse/au débit détecté(e) au moyen dudit capteur (22) est de 2 m/s et/ou **en ce que** ladite seconde valeur de vitesse prédéterminée à comparer à la valeur de vitesse/débit détectée au moyen dudit capteur (22) est de 1 m/s à 1,5 m/s.

4. Système de filtration tangentielle, destiné en particulier à filtrer des produits fluides organiques dans l'industrie agroalimentaire, dans lequel le système comprend :
- un filtre tangentiel (3), pourvu d'éléments de filtration (6), avec une entrée (10) du produit à traiter, avec une sortie (10') du rétentat, et avec au moins une sortie (12,12') du perméat,
- un circuit de recirculation du produit à traiter (18) qui relie ladite entrée (10) du filtre tangentiel à ladite sortie (10') du rétentat et un circuit d'alimentation du nouveau produit à traiter (24),
- une pompe centrifuge (20) et un capteur de vitesse/débit (22) inséré dans ledit circuit de recirculation (18), ledit capteur de vitesse/débit (22) étant inséré dans ledit circuit de recirculation (18) dans une position en aval par rapport à ladite pompe centrifuge (20),
- une unité de contrôle (28), reliée audit capteur (22) de manière à recevoir la vitesse/le débit du produit à traiter, détecté(e) par ledit capteur (22) à l'intérieur dudit circuit de recirculation (18), ladite unité de contrôle (28) étant configurée pour comparer ladite valeur de vitesse/débit détectée à au moins une valeur prédéterminée et pour contrôler en conséquence, sur la base de ladite comparaison, l'activation d'un dispositif de nettoyage (30) destiné à nettoyer les éléments de filtration (6) dudit filtre, sans interrompre l'étape de filtration ;
**caractérisé en ce que** ledit dispositif de nettoyage (30) comprend une pompe (38) qui aspire les particules solides dudit produit à traiter retenues par les éléments de filtration (6) dudit filtre tangentiel (3), ladite pompe (38) étant conçue pour être activée lorsque la vitesse/le débit du produit à traiter passe en dessous de ladite au moins une valeur prédéterminée, l'au moins une valeur prédéterminée comprenant une première valeur, qui représente une vitesse/un débit optimal(e) à maintenir, et une seconde valeur, qui représente une valeur de vitesse/débit seuil inférieure à ne pas dépasser, et
**en ce que** l'unité de contrôle (28) est conçue pour contrôler un niveau d'aspiration supérieur de la pompe (38) lorsque la vitesse/le débit passe en dessous de la seconde valeur par rapport à lorsque la vitesse/le débit passe en dessous de la première valeur.

5. Système selon la revendication 4, **caractérisé en ce que** ladite unité de contrôle (28) est configurée pour comparer, de manière séquentielle et à une fréquence prédéterminée sensiblement continue de l'ordre de quelques millisecondes, les valeurs détectées par ledit capteur (22) avec ladite au moins une valeur prédéfinie.

6. Système selon une ou plusieurs revendications 4 et 5, **caractérisé en ce que** ledit filtre tangentiel est du type à membrane tubulaire (6).

7. Système selon une ou plusieurs revendications de 4 à 6, **caractérisé en ce que** ledit filtre tangentiel (3) a une extension verticale.

8. Système selon une ou plusieurs des revendications précédentes de 4 à 7, **caractérisé en ce que** ledit dispositif de nettoyage (30) comprend, à l'entrée dudit filtre tangentiel (3), une brosse rotative (35) qui est en contact avec l'extrémité d'entrée des éléments de filtration (6) et les racle en continu.

9. Système selon les revendications 4 ou 8, **caractérisé en ce que** le dispositif de nettoyage (30) est monté sur une embouchure creuse rotative (34), qui se raccorde à un canal (36) en liaison avec ladite pompe d'aspiration (38).
